# FASCICULE DE BREVET EUROPEEN

(11) **EP 0 972 675 B1**
(45) Date de publication et mention de la délivrance du brevet: **25.09.2002**
(21) Numéro de dépôt: 99401550.1
(22) Date de dépôt: 23.06.1999
(51) Int. Cl.: B60Q 1/068

(54) **Elément de fixation intermédiaire pour le montage d'un élément sur une partie d'appui d'un projecteur de véhicule automobile**
Zwischenstück zum Elementeinbau auf ein Auflageelement eines Scheinwerfers
Intermediate piece for mounting an element on a supporting member of a headlamp

(30) Priorité: 17.07.1998 FR 9809146
(43) Date de publication de la demande: 19.01.2000
(73) Titulaire: VALEO VISION, 93012 Bobigny Cédex (FR)
(72) Inventeur: Josquin, Daniel, 77290 Mitry Mory (FR)
(74) Mandataire: Lemaire, Marc

(56) Documents cités:
- EP-A- 0 464 690
- FR-A- 1 306 092

## Description

La présente invention concerne de manière générale le montage d'un élément sur une partie d'appui d'un projecteur de véhicule automobile.

Plus particulièrement, elle concerne un projecteur de véhicule automobile comprenant un élément monté sur une partie d'appui par l'intermédiaire d'un élément de fixation intermédiaire présentant une première extrémité apte à coopérer avec une partie de montage dudit élément selon un axe longitudinal X.

L'invention présente une application particulièrement avantageuse pour la fixation d'un réflecteur sur une partie d'appui d'un projecteur.

On connaît déjà des projecteurs avec ou sans boîtier, dans lesquels le réflecteur est monté par l'intermédiaire d'une tige de montage dont une extrémité est vissée ou bien fixée dans une partie fixe du projecteur. Une telle tige de montage comporte à son autre extrémité une tête sphérique apte à être encliquetée dans une tourelle de montage du réflecteur. Pour permettre la coopération de la tête sphérique de la tige de montage avec la tourelle de montage du réflecteur, il est nécessaire que ladite tourelle de montage comprenne un aménagement spécifique, du type logement sphérique de forme complémentaire de celle de ladite tête sphérique.

En outre, on connaît un projecteur de véhicule automobile dans lequel le réflecteur est monté par l'intermédiaire d'une douille de montage sur une partie d'appui du projecteur. Cette douille de montage comporte une languette de montage qui s'étend selon la direction de montage/démontage de ladite douille dans la tourelle de montage du réflecteur. La languette de montage comprend à son extrémité une dent d'encliquetage destinée à s'encliqueter sur la paroi externe de ladite tourelle de montage lors de l'engagement de la douille de montage dans ladite tourelle selon ladite direction de montage/démontage.

Est déjà connu de l'état de la technique, un dispositif d'éclairage de véhicule automobile qui comporte un réflecteur pourvu sur sa partie arrière d'une partie de montage apte à coopérer avec un élément de fixation intermédiaire dont une extrémité se monte sur une partie d'appui du projecteur et une deuxième extrémité coopère avec ladite partie de montage du réflecteur. Cet élément de fixation intermédiaire comporte d'une part une premier élément qui s'engage à l'intérieur de la partie de montage et dont la surface externe coopère par friction avec la paroi lisse interne de la partie de montage du réflecteur, et d'autre part un second élément tubulaire qui recouvre la surface externe de ladite partie de montage du réflecteur et qui est connecté par encliquetage au premier élément de fixation intermédiaire.

Est aussi connu du document EP 0 464 630 A1, un dispositif de fixation de projecteur de véhicule automobile correspondant au préambule de la revendication 1.

Dans tous les projecteurs précités de type connu, pour le montage du réflecteur, il est nécessaire de réaliser une tourelle de montage de forme spécifique permettant sa coopération avec un élément de fixation intermédiaire qui dans le dernier cas précité est de forme complexe, ce qui implique des étapes de réalisation de réflecteur plus complexes, avec l'utilisation de moules à tiroir, et finalement un surcoût de fabrication du projecteur ainsi réalisé.

Afin de pallier aux inconvénients de l'état de la technique précitée, il a été proposé dans la demande de brevet français FR 2 752 040 appartenant à la demanderesse, un projecteur de véhicule automobile comprenant un réflecteur monté sur une partie d'appui par l'intermédiaire d'un élément de fixation intermédiaire qui comporte des ailettes élastiquement déformables s'étendant en général de manière sensiblement transversale à ladite direction de montage/démontage et étant aptes à venir en prise avec une surface lisse de ladite partie de montage du réflecteur, en se déformant pour retenir par friction ledit élément de fixation intermédiaire sur ladite partie de montage du réflecteur.

La présente invention propose un autre agencement de projecteur de véhicule automobile du même type, dans lequel le montage d'un élément du projecteur sur une partie d'appui de ce dernier est particulièrement simple et économique.

Selon une caractéristique essentielle du projecteur conforme à l'invention, la deuxième extrémité de l'élément de fixation intermédiaire porte une rondelle s'étendant sensiblement transversalement à l'axe longitudinal X, et présentant un bord périphérique destiné à coopérer avec la surface de ladite partie de montage, ladite deuxième extrémité comporte un corps qui d'une part est apte à pivoter autour de son axe par rapport à ladite rondelle maintenu fixe en rotation autour dudit axe X par sa coopération avec la surface de ladite partie de montage, et d'autre part présente transversalement à l'axe X une section conformée de telle sorte que lors de la rotation du corps autour de son axe celui-ci déforme élastiquement ladite rondelle pour plaquer au moins une partie de son bord périphérique contre la surface de ladite partie de montage afin de retenir ledit élément intermédiaire sur cette dernière.

Ainsi, par rotation du corps de l'élément de fixation intermédiaire du projecteur selon l'invention, on provoque une expansion ou une compression de la rondelle portée par ledit corps, de façon à la comprimer entre ce dernier et la surface de la partie de montage, pour maintenir ainsi l'élément de fixation intermédiaire sur la partie de montage. On évite ainsi un montage à force de l'élément de fixation intermédiaire sur la partie de montage, ce qui est toujours préjudiciable. On obtient toutefois un montage tout à fait sécurisé des deux éléments.

Selon d'autres caractéristiques non limitatives et avantageuses du projecteur selon l'invention, il est prévu que :
- la section du corps de l'élément de fixation intermédiaire présente une forme ovale de sorte qu'une rotation d'un quart de tour dudit corps autour de son axe provoque une déformation maximale de ladite rondelle.
- Le bord périphérique de la rondelle présente au moins sur une partie de sa longueur, de manière symétrique par rapport à l'axe X, un profil cannelé destiné à s'imbriquer dans une partie cannelée complémentaire de la surface de ladite partie de montage lors de ladite déformation élastique de ladite rondelle.
- Le bord périphérique de ladite rondelle comporte une saillie destinée à coulisser selon l'axe X dans une rainure de forme complémentaire prévue dans la surface de ladite partie de montage, de manière à bloquer ladite rondelle en rotation autour de l'axe X.
- La rondelle est légèrement cintrée selon un profil en forme d'entonnoir.
- Le corps de l'élément de fixation intermédiaire comporte un support périphérique recevant en appui la rondelle.
- Le corps de l'élément de fixation intermédiaire porte ladite rondelle sur sa surface externe et est destinée à être engagé dans un trou borgne selon l'axe X, le bord périphérique externe de la rondelle étant destiné à être plaqué par expansion élastique de ladite rondelle contre la surface du trou borgne.

L'invention propose également un procédé de montage d'un projecteur de véhicule tel que précité, caractérisé en ce qu'on positionne selon l'axe X la deuxième extrémité de l'élément de fixation intermédiaire portant la rondelle, sur la partie de montage de sorte que le bord périphérique de la rondelle coopère avec la surface de la partie de montage et bloque ladite rondelle en rotation autour dudit axe X, puis on tourne la deuxième extrémité de l'élément de fixation intermédiaire autour de l'axe X d'un angle déterminé, de manière à déformer élastiquement ladite rondelle et plaquer son bord périphérique contre la surface de la partie de montage pour retenir ledit élément de fixation intermédiaire sur ladite partie de montage.

La description qui va suivre au regard des dessins annexés fera bien comprendre en quoi consiste l'invention et comment elle peut être réalisée.

Sur les dessins annexés :
- la figure 1 est une vue en coupe de côté d'un élément de fixation intermédiaire et de la partie d'un montage de l'élément du projecteur de véhicule automobile selon l'invention,
- la figure 2 est une vue en coupe selon le plan A-A de l'élément de fixation intermédiaire représenté sur la figure 1,
- la figure 3 est une vue en coupe selon le plan B-B de la partie de montage représentée sur la figure 1,
- la figure 4 est une vue de détail d'une partie de la partie de montage coopérant avec la rondelle portée par l'élément de fixation intermédiaire.

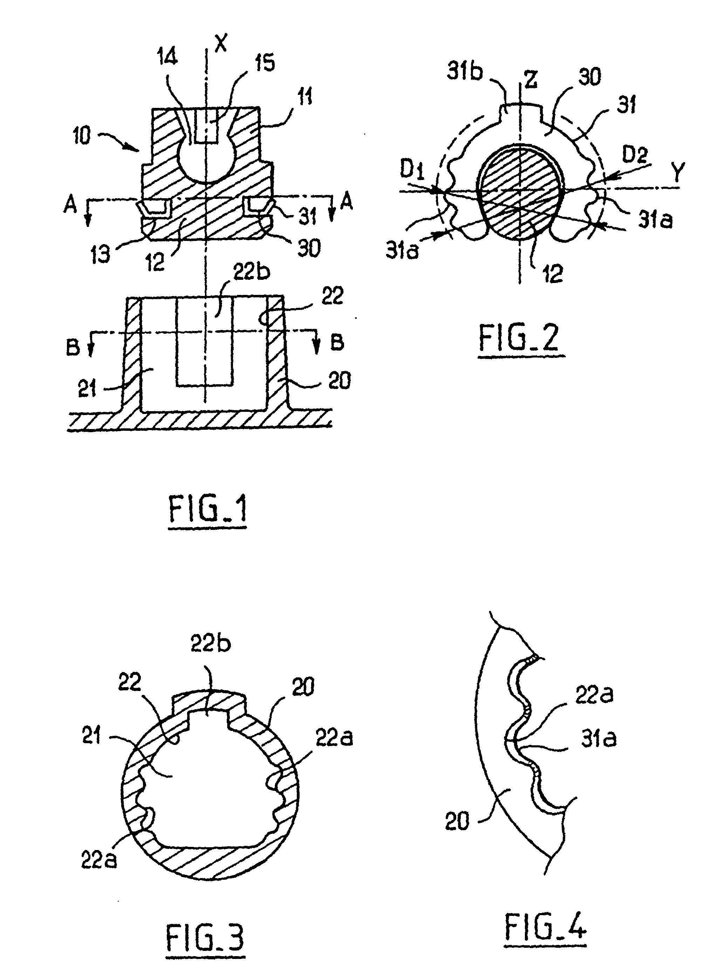

Sur la figure 1, on a représenté un mode de réalisation d'un élément de fixation intermédiaire 10 destiné notamment au montage d'un élément (non représenté), tel qu'un réflecteur, sur une partie d'appui d'un projecteur de véhicule automobile (non représenté).

Cet élément de fixation intermédiaire 10 s'étend selon une direction générale X qui est la direction de montage/démontage dudit élément de fixation intermédiaire 10 sur une partie de montage 20 de l'élément (non représenté).

L'élément de fixation intermédiaire 10 comporte une première extrémité 11 apte à coopérer avec ladite partie d'appui (non représenté) du projecteur.

On entend par partie d'appui, par exemple, une tige de réglage montée à translation sur une partie fixe (non représentée) du projecteur tel qu'un boîtier de projecteur ou une partie de la carrosserie, ou encore par exemple une tige de montage fixée sur une partie d'un projecteur.

Cette première extrémité 11 dudit élément de fixation intermédiaire 10 comporte un logement 14 qui s'étend généralement selon l'axe X dudit élément de fixation intermédiaire, il comporte un fond sphérique et présente une ouverture vers extérieur. Cette ouverture vers l'extérieur est évasée. Les parois latérales du logement 14 sont pourvues de découpes formant des languettes élastiques 15 pour le cloquage du logement 14 de la première extrémité 11 de l'élément de fixation intermédiaire 10 sur la sphère d'extrémité d'une tige de réglage ou de montage du projecteur.

L'élément de fixation intermédiaire 10 représenté sur la figure 1 comporte une deuxième extrémité 12 constituée par un corps ici généralement cylindrique s'étendant selon l'axe X.

En outre, comme le montrent les figures 1 et 2, il est prévu une rondelle 30 montée sur le corps 12 dudit élément de fixation intermédiaire 10 de sorte qu'elle s'étend généralement de manière sensiblement transversale à l'axe X. Cette rondelle 30 présente un bord périphérique 31, ici un bord périphérique externe, qui est destiné à coopérer avec la surface 22 la partie de montage 20 de l'élément, lors du montage de l'élément de fixation intermédiaire 10 sur ladite partie de montage 20.

Le corps 12 de l'élément de fixation intermédiaire 10 comporte un support périphérique 13 recevant en appui la rondelle 30. Ce support périphérique 13 est prévu à une extrémité du corps 12.

Dans le cas typique représenté, la partie de montage 20 présente un trou borgne 21 dans lequel est engagé le corps 12 de l'élément de fixation intermédiaire 10.

Lors de l'engagement du corps 12 de l'élément de fixation intermédiaire 10 dans le trou borgne 21, le bord périphérique 31 de la rondelle 30 coopère avec la surface 22 du trou borgne 21, de manière à bloquer ladite rondelle 30 en rotation autour de I 'axe X.

A cet effet, comme cela apparaît plus clairement sur les figures 2 et 3, le bord périphérique 31 de la rondelle 30 comporte une saillie 31a destinée à coulisser selon l'axe X dans une rainure 22a de forme complémentaire prévue sur la surface 22 du trou borgne 21 de la partie de montage 20, de manière à bloquer ladite rondelle 30 en rotation autour de l'axe X.

Bien entendu selon une variante non représentée, on peut prévoir que la saillie soit réalisée sur la surface de la partie de montage, et que la rainure soit prévue dans le bord périphérique de la rondelle.

Selon une caractéristique particulièrement avantageuse de l'élément de fixation intermédiaire 10 représenté sur la figure 1, il est apte à pivoter autour de l'axe X par rapport à ladite rondelle 30 maintenue fixe en rotation autour de l'axe X par sa coopération avec la surface 22 de la partie de montage, et le corps 12 de l'élément de fixation intermédiaire 10 présente transversalement à l'axe X une section conformée de telle sorte que lors de la rotation dudit élément de fixation intermédiaire 10, le corps 12 déforme élastiquement ladite rondelle 30 pour plaquer au moins une partie de son bord périphérique 30 contre la surface 22 de ladite partie de montage 20 et retenir ainsi l'élément de fixation intermédiaire 10 sur ladite partie de montage.

A cet effet, et comme le montre plus particulièrement la figure 2, la section du corps 12 de l'élément de fixation intermédiaire 10 peut présenter une forme ovale de sorte qu'une rotation d'un quart de tour du corps 12 autour de son axe provoque une déformation maximale de ladite rondelle 30. Ici, cette déformation est une expansion.

Comme le montre la figure 2, la rondelle 30 passe alors d'un diamètre externe D1 à un diamètre externe D2 après rotation d'un quart de tour du corps 12 de section ovale de l'élément de fixation intermédiaire 10, dans ladite rondelle.

Bien entendu, on peut prévoir, selon des variantes non représentées, d'autres formes de section, il suffit que cette section comporte un axe central de symétrie, ici l'axe X, et qu'elle présente au moins un petit diamètre et un grand diamètre passant par l'axe X. II est néanmoins exclu une section carrée ou encore une section en losange.

En fonction de la forme de la section du corps de l'élément de fixation intermédiaire, l'angle de rotation du corps visant à déformer la rondelle pour la presser contre la surface de la partie de montage, est différent. L'angle de cette rotation est déterminé de manière à positionner le corps selon son grand diamètre contre la rondelle pour la déformer.

L'action du corps 12 sur la rondelle 30 qui est plaquée contre la surface 22 de la partie de montage 20, tend également à plaquer le support périphérique 13 du corps 12 vers le fond du trou borgne 21.

Comme le montrent plus particulièrement les figures 2, 3 et 4, le bord périphérique 31 de la rondelle 30, qui est ici un bord périphérique externe, présente au moins sur une partie de sa longueur, de manière symétrique par rapport à l'axe X, un profil cannelé 31a destiné à s'imbriquer dans une partie cannelée 22a complémentaire de la surface de la partie de montage 20 lors de ladite déformation élastique de ladite rondelle 30. Ici, la partie cannelée 22a est prévue sur la surface 22 du trou borgne 21 de la partie de montage 20.

Comme le montre plus particulièrement la figure 4, lors de l'introduction du corps 12 dans le trou borgne 21, les cannelures 31a de la rondelle 30 viennent se positionner tangentiellement aux cannelures 22a prévues sur la surface 22 du trou borgne 21. Puis, lors de l'expansion de la rondelle sous l'action du corps 12 tourné d'un quart de tour autour de l'axe X, les cannelures 31a et 22a se positionnent l'une contre l'autre de façon à renforcer la retenue de l'élément de fixation intermédiaire 10 sur la partie de montage.

Pour accentuer ce phénomène, il est avantageux que la rondelle 30 soit légèrement cintrée selon un profil d'entonnoir, avec un bord périphérique 31 relevé (voir figure 1).

En tout état de cause, la rondelle 30 présente une forme générale circulaire avec un orifice central circulaire ouvert vers l'extérieur par une partie évasée débouchant sur le bord périphérique exteme de manière à faciliter son montage sur le corps 12 de l'élément de fixation intermédiaire 10.

L'élément de fixation intermédiaire 10 est réalisé par moulage d'un matériau thermoplastique, et la rondelle 30 est réalisée en tôle.

Le procédé de montage de l'élément de fixation intermédiaire 10 consiste à positionner sur l'axe X le corps 12 de cet élément, portant la rondelle 30, sur la partie de montage 20 de sorte que le bord périphérique 31 de la rondelle coopère avec la surface 22 de ladite partie de montage. En l'occurrence ici, la saillie 31b prévue sur le bord périphérique de la rondelle 30 s'engage dans la rainure 22b prévue sur la surface 22 du trou borgne 21 et les cannelures 31a prévues sur le bord périphérique 31 de la rondelle 30 viennent se positionner de manière tangentielle aux cannelures 22a prévues dans la surface 22a du trou borgne 21. Ainsi, la rondelle 30 coopère avec la surface 22 de la partie de montage et est bloquée en rotation autour dudit axe X. Dans une deuxième étape, on tourne ledit corps 12 autour de l'axe X d'un angle déterminé de manière à déformer élastiquement la rondelle 30 et plaquer son bord périphérique 30 contre la surface 22 de la partie de montage pour retenir l'élément de fixation intermédiaire sur ladite partie de montage .

Dans le cas présent, compte tenu du fait que la section du corps 12 de l'élément de fixation intermédiaire 10 présente une forme ovale, l'angle de rotation est de 45°.

En particulier, selon une variante non représentée, on peut prévoir que le corps de l'élément de fixation intermédiaire soit un corps creux qui porte intérieurement la rondelle. La partie de montage de l'élément de projecteur est alors un corps plein sur lequel est monté l'élément de fixation intermédiaire. Dans ce cas, le bord périphérique de la rondelle compressé contre la partie de montage est un bord périphérique interne et la déformation élastique de la rondelle par le corps de l'élément de fixation est une compression.

## Revendications

1. Projecteur de véhicule automobile comprenant un élément monté sur une partie d'appui par l'intermédiaire d'un élément de fixation intermédiaire (10) présentant une première extrémité (11) apte à coopérer avec ladite partie d'appui et une deuxième extrémité (12) apte à coopérer avec une partie de montage (20) dudit élément selon un axe longitudinal X, **caractérisé en ce que** ladite deuxième extrémité (12) porte une rondelle (30) s'étendant sensiblement transversalement à l'axe longitudinal X et présentant un bord périphérique (31) destiné à coopérer avec la surface (22) de ladite partie de montage (20), **en ce que** ladite deuxième extrémité (12) comporte un corps qui d'une part est apte à pivoter autour de son axe par rapport à ladite rondelle (30) maintenue fixe en rotation autour dudit axe X par sa coopération avec la surface (22) de ladite partie de montage (20), et d'autre part présente transversalement à l'axe X une section conformée de telle sorte que lors de la rotation du corps cylindrique (12) autour de son axe celui-ci déforme élastiquement ladite rondelle (30) pour plaquer au moins une partie de son bord périphérique (31) contre la surface (22) de ladite partie de montage (20) et retenir ledit élément de fixation intermédiaire (10) sur cette dernière.

2. Projecteur selon la revendication 1, **caractérisé en ce que** la section du corps (12) de l'élément de fixation intermédiaire (10) présente une forme ovale de sorte qu'une rotation d'un quart de tour dudit corps (12) autour de son axe provoque une déformation maximale de ladite rondelle (30).

3. Projecteur selon l'une des revendications 1 ou 2, **caractérisé en ce que** le bord périphérique (31) de la rondelle (30) présente au moins sur une partie de sa longueur, de manière symétrique par rapport à l'axe X, un profil cannelé (31a) destiné à s'imbriquer dans une partie cannelée (22a) complémentaire de la surface (22) de ladite partie de montage (20) lors de ladite déformation élastique de ladite rondelle (30).

4. Projecteur selon l'une des revendications 1 à 3, **caractérisé en ce que** le bord périphérique (31) de ladite rondelle (30) comporte une saillie (31b) destinée à coulisser selon l'axe X dans une rainure (22b) de forme complémentaire prévue dans la surface (22) de ladite partie de montage (20), de manière à bloquer ladite rondelle (30) en rotation autour de l'axe X.

5. Projecteur selon l'une des revendications 1 à 4, **caractérisé en ce que** la rondelle (30) est légèrement cintrée selon un profil en forme d'entonnoir.

6. Projecteur selon l'une des revendications 1 à 5, **caractérisé en ce que** le corps (12) de l'élément de fixation intermédiaire (10) comporte un support périphérique (13) recevant en appui la rondelle (30).

7. Projecteur selon l'une des revendications 1 à 6, **caractérisé en ce que** le corps (12) de l'élément de fixation intermédiaire (10) porte ladite rondelle (30) sur sa surface externe et est destiné à être engagé dans un trou borgne (21) selon l'axe X, le bord périphérique externe (31) de la rondelle (30) étant destiné à être plaqué par expansion élastique de ladite rondelle, contre la surface (22) du trou borgne (21).

8. Projecteur selon l'une des revendications 1 à 7, **caractérisé en ce que** la rondelle (30) présente une forme générale circulaire.

9. Projecteur selon l'une des revendications 1 à 8, **caractérisé en ce que** la première extrémité (11) dudit élément de fixation intermédiaire (10) est agencée de manière à pouvoir être cloquée sur l'extrémité d'une tige de réglage montée à translation dans une partie fixe du projecteur.

10. Projecteur selon des revendication 1 à 8, **caractérisé en ce que** la première extrémité (11) dudit élément de fixation intermédiaire (10) est agencée de manière à pouvoir être cloquée sur l'extrémité d'une tige de montage fixée sur une partie fixe du projecteur.

11. Projecteur selon l'une des revendications précédentes, **caractérisé en ce que** l'élément de fixation intermédiaire (10) est réalisé en matériau thermoplastique.

12. Projecteur selon l'une des revendications précédentes, **caractérisé en ce que** la rondelle (30) est réalisée en tôle.

13. Procédé de montage d'un projecteur de véhicule automobile selon l'une des revendications 1 à 12, **caractérisé en ce qu'**on positionne selon l'axe X la deuxième extrémité (12) de l'élément de fixation intermédiaire (10), portant la rondelle (30), sur la partie de montage (20) de sorte que le bord périphérique (31) de la rondelle (30) coopère avec la surface (22) de ladite partie de montage (20) et bloque ladite rondelle (30) en rotation autour dudit axe X, puis on tourne ladite deuxième extrémité (12) de l'élément de fixation intermédiaire (10) autour de l'axe X d'un angle déterminé de manière à déformer élastiquement ladite rondelle (30) et plaqùer son bord périphérique contre la surface (22) de la partie de montage pour retenir ledit élément de fixation intermédiaire sur ladite partie de montage.

## Claims

1. A motor vehicle headlight comprising an element mounted on an engaging part through an interposed intermediate fastening element (10) having a first end portion (11) adapted to cooperate with the said engaging part, together with a second end portion (12) adapted to cooperate with a mounting portion (20) of the said element along a longitudinal axis X, **characterised in that** the said second end portion (12) carries a ring (30) extending substantially transversely to the longitudinal axis X and having a peripheral edge (31) which is adapted to cooperate with the surface (22) of the said mounting portion (20), **in that** the said second end portion (12) comprises a body which, firstly, is adapted to pivot about its axis with respect to the said ring (30), which is held fixed against rotation about the said axis X by its cooperation with the surface (22) of the said mounting portion (20), and, secondly, has a cross section transverse to the axis X which is so configured that, during the rotation of the cylindrical body (12) about its axis, the latter deforms the said ring (30) elastically so as to lay at least part of its peripheral edge (31) against the surface (22) of the said mounting portion (20) and to retain the said intermediate fastening portion (10) on the latter.

2. A headlight according to Claim 1, **characterised in that** the cross section of the body(12) of the intermediate fastening element (10) is oval, so that a rotation of the said body (12) through a quarter turn about its axis results in maximum deformation of the said ring (30).

3. A headlight according to Claim 1 or Claim 2, **characterised in that** the peripheral edge (31) of the ring (30) has, over at least part of its length and symmetrically with respect to the axis X, a splined profile (31a) adapted to mesh in a complementary splined portion (22a) of the surface (22) of the said mounting portion (20) during the said elastic deformation of the said ring (30).

4. A headlight according to one of Claims 1 to 3, **characterised in that** the peripheral edge (31) of the said ring (30) includes a projecting element (31b) arranged to slide, along the axis X, in a groove (22b) of complementary form in the surface (22) of the said mounting portion (20), whereby to block the said ring (30) against rotation about the axis X.

5. A headlight according to one of Claims 1 to 4, **characterised in that** the ring (30) is slightly bent to a funnel-shaped profile.

6. A headlight according to one of Claims 1 to 5, **characterised in that** the body (12) of the intermediate fastening element (10) defines a peripheral support (13) receiving the ring (30) in engagement therein.

7. A headlight according to one of Claims 1 to 6, **characterised in that** the body (12) of the intermediate fastening element (10) carries the said ring (30) on its outer surface and is adapted to be engaged in a blind hole (21) along the axis X, the external peripheral edge (31) of the ring (30) being adapted to be laid, by elastic expansion of the said ring, against the surface (22) of the blind hole (21).

8. A headlight according to one of Claims 1 to 7, **characterised in that** the ring (30) is generally circular in form.

9. A headlight according to one of Claims 1 to 8, **characterised in that** the first end portion (11) of the said intermediate fastening element (10) is so arranged that it can be snap-fitted on the end of an adjusting rod mounted for movement in a straight line in a fixed part of the headlight.

10. A headlight according to Claims 1 to 8, **characterised in that** the first end portion (11) of the said intermediate fastening element (10) is so arranged that it can be snap-fitted on the end of a mounting rod secured on a fixed part of the headlight.

11. A headlight according to one of the preceding Claims, **characterised in that** the intermediate fastening element (10) is made of thermoplastic material.

12. A headlight according to one of the preceding Claims, **characterised in that** the ring (30) is made from sheet steel.

13. A method of assembling a motor vehicle headlight according to one of Claims 1 to 12, **characterised in that** the second end portion (12) of the intermediate fastening element (10), carrying the ring (30), is positioned on the mounting portion (20), in such a way that the peripheral edge (31) of the ring (30) is in cooperation with the surface (22) of the said mounting portion (20) and is blocking the said ring against rotation about the said axis X, and the said second end portion (12) of the intermediate fastening element (10) is then turned about the axis X through a predetermined angle, whereby to deform the said ring (30) elastically and to lay its peripheral edge against the surface (22) of the mounting portion, to retain the said intermediate fastening element on the said mounting portion.

## Patentansprüche

1. Kraftfahrzeugscheinwerfer mit einem Element, das an einem Auflageteil mit Hilfe eines Befestigungszwischenstücks (10) angebracht ist, das ein erstes Ende (11), welches mit dem Auflageteil zusammenzuwirken vermag, sowie ein zweites Ende (12) aufweist, das mit einem Montageteil (20) des Elements in einer Längsachse X zusammenzuwirken vermag,
**dadurch gekennzeichnet, daß** das zweite Ende (12) eine Unterlegscheibe (30) trägt, die sich im wesentlichen quer zur Längsachse X erstreckt und einen Umfangsrand (31) aufweist, der dazu bestimmt ist, mit der Oberfläche (22) des Montageteils (20) zusammenzuwirken, daß das zweite Ende (12) einen Körper umfaßt, der sich einerseits in bezug auf die Unterlegscheibe (30) um seine Achse zu drehen vermag, welche durch das Zusammenwirken mit der Oberfläche des Montageteils (20) zur Achse X drehfest gehalten wird, und der andererseits quer zur Achse X einen Querschnitt aufweist, der so ausgebildet ist, daß bei der Drehung des zylindrischen Körpers (12) um seine Achse dieser die Unterlegscheibe (30) elastisch verformt, um wenigstens einen Teil ihres Umfangsrandes (31) gegen die Oberfläche (22) des Montageteils (20) zu drücken und das Befestigungszwischenstück (10) an diesem zu halten.

2. Scheinwerfer nach Anspruch 1,
**dadurch gekennzeichnet, daß** der Querschnitt des Körpers (12) des Befestigungszwischenstücks (10) eine ovale Form aufweist, derart, daß eine Vierteldrehung des Körpers (12) um seine Achse eine maximale Verformung der Unterlegscheibe (30) bewirkt.

3. Scheinwerfer nach einem der Ansprüche 1 oder 2,
**dadurch gekennzeichnet, daß** der Umfangsrand (31) der Unterlegscheibe (30) wenigstens auf einem Teil seiner Länge ein gerilltes Profil (31a) symmetrisch zur Achse X aufweist, welches dazu bestimmt ist, sich mit einem hierzu komplementären gerillten Teil (22a) der Oberfläche (22) des Montageteils (20) bei der elastischen Verformung der Unterlegscheibe (30) zu verzahnen.

4. Scheinwerfer nach einem der Ansprüche 1 bis 3,
**dadurch gekennzeichnet, daß** der Umfangsrand (31) der Unterlegscheibe (30) einen Vorsprung (31b) aufweist, der dazu bestimmt ist, entlang der Achse X in einer komplementär dazu ausgebildeten Nut (22b) zu gleiten, die in der Oberfläche (22) des Montageteils (20) vorgesehen ist, um die Unterlegscheibe (30) gegen eine Drehung um die Achse X zu blockieren.

5. Scheinwerfer nach einem der Ansprüche 1 bis 4,
**dadurch gekennzeichnet, daß** die Unterlegscheibe (30) leicht trichterförmig gebogen ist.

6. Scheinwerfer nach einem der Ansprüche 1 bis 5,
**dadurch gekennzeichnet, daß** der Körper (12) des Befestigungszwischenstücks (10) eine Randauflage (13) umfasst, an der die Unterlegscheibe (30) aufliegt.

7. Scheinwerfer nach einem der Ansprüche 1 bis 6,
**dadurch gekennzeichnet, daß** der Körper (12) des Befestigungszwischenstücks (10) die Unterlegscheibe (30) auf seiner Außenfläche trägt und dazu bestimmt ist, in ein Sackloch (21) entlang der Achse X eingeführt zu werden, wobei der äußere Umfangsrand (31) der Unterlegscheibe (30) dazu bestimmt ist, durch elastische Ausdehnung der Unterlegscheibe gegen die Oberfläche (22) des Sacklochs (21) gedrückt zu werden.

8. Scheinwerfer nach einem der Ansprüche 1 bis 7,
**dadurch gekennzeichnet, daß** die Unterlegscheibe (30) allgemein kreisförmig ist.

9. Scheinwerfer nach einem der Ansprüche 1 bis 8,
**dadurch gekennzeichnet, daß** das erste Ende (11) des Befestigungszwischenstücks (10) so ausgebildet ist, daß es auf das Ende einer Einstellstange aufgesteckt werden kann, die in einem feststehenden Teil des Scheinwerfers translatorisch verstellbar angebracht ist.

10. Scheinwerfer nach den Ansprüchen 1 bis 8,
**dadurch gekennzeichnet, daß** das erste Ende (11) des Befestigungszwischenstücks (10) so ausgebildet ist, daß es auf das Ende einer Montagestange aufgesteckt werden kann, die an einem feststehenden Teil des Scheinwerfers befestigt ist.

11. Scheinwerfer nach einem der vorhergehenden Ansprüche,
**dadurch gekennzeichnet, daß** das Befestigungszwischenstück (10) aus thermoplastischem Material ausgeführt ist.

12. Scheinwerfer nach einem der vorhergehenden Ansprüche,
**dadurch gekennzeichnet, daß** die Unterlegscheibe (30) aus Blech ausgeführt ist.

13. Verfahren zur Montage eines Kraftfahrzeugscheinwerfers nach einem der Ansprüche 1 bis 12,
**dadurch gekennzeichnet, daß** das zweite Ende (12) des die Unterlegscheibe (30) tragenden Befestigungszwischenstücks (10) auf dem Montageteil (20) längs der Achse X so positioniert wird, daß der Umfangsrand (31) der Unterlegscheibe (30) mit der Oberfläche (22) des Montageteils (20) zusammenwirkt und die Unterlegscheibe (30) in der Drehung um die Achse X blockiert, und anschließend das zweite Ende (12) des Befestigungszwischenstücks (10) um einen bestimmten Winkel um die Achse X gedreht wird, so daß die Unterlegscheibe (30) elastisch verformt und ihr Umfangsrand gegen die Oberfläche (22) des Montageteils gedrückt wird, um das Befestigungszwischenstück auf dem Montageteil zu halten.
